(19) Europäisches Patentamt
European Patent Office
Office européen des brevets

(11) EP 2 259 098 B1

## (12) EUROPÄISCHE PATENTSCHRIFT

(45) Veröffentlichungstag und Bekanntmachung des Hinweises auf die Patenterteilung:
**04.12.2013 Patentblatt 2013/49**

(51) Int Cl.:
*G02B 5/02* (2006.01)        *G02B 17/08* (2006.01)
*G09F 9/33* (2006.01)

(21) Anmeldenummer: **10164321.1**

(22) Anmeldetag: **28.05.2010**

(54) **Anzeigevorrichtung**

Display device

Dispositif d'affichage

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **03.06.2009 DE 102009024642**

(43) Veröffentlichungstag der Anmeldung:
**08.12.2010 Patentblatt 2010/49**

(73) Patentinhaber: **E.G.O. Elektro-Gerätebau GmbH 75038 Oberderdingen (DE)**

(72) Erfinder: **Fluhrer, Henry 75015 Bretten (DE)**

(74) Vertreter: **Patentanwälte Ruff, Wilhelm, Beier, Dauster & Partner Postfach 10 40 36 70035 Stuttgart (DE)**

(56) Entgegenhaltungen:
**EP-A2- 1 667 091      DE-A1- 4 311 937**
**DE-U1- 20 314 391      US-A- 3 780 357**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Anzeigevorrichtung mit einem Träger, auf dem mindestens ein Leuchtmittel angeordnet ist mit Lichtverteilmitteln darüber.

Es ist beispielsweise aus der DE 20314391 U bekannt, eine solche Anzeigevorrichtung zur Verfügung zu stellen mit LED als Leuchtmittel, mit denen eine sogenannte Sieben-Segment-Anzeige realisiert werden kann. Dabei weisen die Lichtverteilmittel einen Lichtverteilkörper auf, der zwar lichtdurchlässig ist, aber dessen Material so gewählt ist, dass es diffus streut für eine gleichmäßige Lichtverteilung an Lichtaustrittsseiten der Lichtverteilmittel bzw. des Lichtverteilkörpers.

Aus der DE 4311937 A ist eine weitere ähnliche Anzeigevorrichtung bekannt, bei der wiederum über LED ein Lichtverteilkörper als Lichtverteilmittel darüber angeordnet ist. Die LED ragen dabei in eine quaderförmige Ausnehmung des Lichtverteilkörpers hinein. Alternativ zu einer aufgerauten Oberfläche des Lichtverteilkörpers zur größtmöglichen Lichtstreuung kann ein Dämpfungskörper auf dem Lichtverterkörper aufgebracht sein, dessen Material wiederum Lichtstreuung und Verteilung für eine gleichmäßige Lichterscheinung verbessert.

Die US 3,780,357 zeigt eine Anzeigevorrichtung mit einem Lichtverteilkörper, der eine glatte Lichteintrittsseite über einem Leuchtmittel und eine im Wesentlichen ebene, unter Umständen leicht aufgeraute, Oberseite als Lichtaustrittsseite aufweist. Die Seitenwände des Lichtverteilkörpers können entweder gerade bzw. senkrecht verlaufen oder aber schüsselartig gewölbt sein mit Seitenwänden, die weit neben dem Leuchtmittel auf einem Träger für den Lichtverteilkörper aufliegen.

Die EP 1 667 091 A2 zeigt einen Lichtverteilkörper oberhalb eines Leuchtmittels, wobei für das Leuchtmittel eine sphärische bzw. rund-gewölbte Ausnehmung im Lichtverteilkörper vorgesehen ist. Diese rundgewölbte Form wird für eine möglichst gleichmäßige Lichtabstrahlung in alle Richtungen gewählt.

## Aufgabe und Lösung

Der Erfindung liegt die Aufgabe zugrunde, eine eingangs genannte Anzeigevorrichtung zu schaffen mit verbesserter Anzeigewirkung bzw. Leuchtwirkung bei gleichzeitig geringem konstruktiven Aufwand.

Gelöst wird diese Aufgabe durch eine Anzeigevorrichtung mit den Merkmalen des Anspruchs 1. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Es ist vorgesehen, dass die Lichtverteilmittel einen dreidimensionalen Lichtverteilkörper aufweisen, der zum Leuchtmittel hin eine Lichteintrittsseite und von dem Leuchtmittel weg eine Lichtaustrittsseite aufweist. Erfindungsgemäß besteht der Lichtverteilkörper aus transparentem Material, insbesondere möglichst transparent bzw. möglichst lichtdurchlässig, wobei die Lichteintrittsseite eine Form aufweist zur Optimierung der gleichmäßigen Lichtverteilung vom Leuchtmittel auf die Lichtaustrittsseite.

Dadurch wird erreicht, dass zum einen durch die spezielle Gestaltung der Lichteintrittsseite das Licht der Leuchtmittel möglichst gleichmäßig auf die Lichtaustrittsseite verteilt wird. Damit kann vor allem eine gleichmäßige Lichterscheinung bzw. Leuchtwirkung der Anzeigevorrichtung erreicht werden. Dies wird durch eine optionale Ausbildung der Lichtaustrittsseite als Diffusor noch verstärkt, wobei diese eben gerade durch die genannte gleichmäßige Lichtverteilung nicht zwingend vorhanden sein muss oder aber nur mit schwacher Wirkung, so dass sie auch nicht viel Licht schluckt. Des weiteren kann durch das transparente bzw. vorteilhaft möglichst lichtdurchlässige Material des Lichtverteilkörpers die Leuchtstärke insgesamt hoch gehalten werden für eine möglichst gut sichtbare Anzeigevorrichtung. Es werden also zwei Funktionen optimiert.

In Ausgestaltung der Erfindung kann vorgesehen sein, dass ein Transmissionsgrad für das Licht der Leuchtmittel im Lichtverteilkörper mindestens 95% beträgt, vorteilhaft sogar mindestens 97% bis 99%. Des weiteren besteht der Lichtverteilkörper besonders vorteilhaft aus nicht eingefärbtem Material, insbesondere einem Kunststoff wie Kunstharz bzw. Epoxidharz, Polyamid oder Polyäthylen.

Der ansonsten transparente Lichtverteilkörper kann in einer Ausgestaltung der Erfindung Streupartikel beinhalten zur Verbesserung der Lichtverteilung.

In weiterer Ausgestaltung der Erfindung kann der Lichtverteilkörper einteilig und einstückig ausgebildet sein. Besonders vorteilhaft sind die gesamten Lichtverteilmittel einteilig und einstückig und bestehen nur aus dem Lichtverteilkörper. Dieser Lichtverteilkörper kann direkt auf dem Träger als einzelnes Teil befestigt sein. Alternativ kann er in einen größeren Kunststoffblock bzw. ein Kunststoffgehäuse integriert sein, vorteilhaft zusammen mit weiteren Lichtverteilkörpern für weitere Leuchtmittel auf dem Träger. Beispielsweise kann ein solches Gehäuse ausgebildet sein als gesamte Sieben-Segment-Anzeige, wobei dann sieben LED als Leuchtmittel darunter vorgesehen sind.

Die seitlichen Außenseiten des Lichtverteilkörpers können möglichst glatt bzw. hochglanzpoliert sein, so wird auftreffendes Licht von den Leuchtmitteln wieder in den Lichtverteilkörper hinein reflektiert und tritt an der Lichtaustrittsseite aus. Dadurch können Streuverluste minimiert werden.

In weiterer Ausgestaltung der Erfindung weist die Lichteintrittsseite eine glatte Oberfläche auf, vorteilhaft möglichst glatt bzw. poliert. Auch dies reduziert Streuverluste und somit werden Lichtverluste im Lichtverteilkörper reduziert.

Zur Optimierung der gleichmäßigen Lichtverteilung weist die Lichteintrittsseite im Seitenschnitt erfindungsgemäß eine Doppel-S-Form auf, wobei über dem Mittelpunkt des Leuchtmittels bzw. dessen leuchtender Fläche der am weitesten entfernte Punkt dieser Doppel-S-Form liegt. Im mittleren Bereich kann die Lichteintrittsseite also mit Bezug auf den Lichtverteilkörper konkav gewölbt sein, wobei diese konkave Wölbung sich zu den Seiten gehend umkehrt in eine konvexe Wölbung. Daran nach außen anschließend wiederum dreht sich die Wölbung wieder um und es liegen ein ebener Verlauf oder wieder eine leichte konkave Wölbung vor.

Eine maximale Höhendifferenz zwischen dem niedrigsten Punkt und dem höchsten Punkt der Lichteintrittsseite kann vorteilhaft weniger als 0,2 mm betragen, besonders vorteilhaft können es etwa 0,1 mm sein. Dies scheint zwar nur eine geringe Höhendifferenz, aber angesichts der sehr geringen Größen von Leuchtmitteln, die vorteilhaft als LED oder SMD-LED ausgebildet sind, kann so eine erkennbare und sehr vorteilhafte Lichtverteilung erreicht werden. Grundsätzlich kommt es aber hauptsächlich auf die Form der Lichteintrittsseite an, nicht auf deren absolute Abmessungen.

In weiterer Ausbildung der Erfindung kann eine Profilierung bzw. Formgebung der Lichteintrittsseite mit der mittigen konkaven Wölbung gleichmäßig bzw. abgerundet sein. Dies bedeutet also, dass die vorgenannte Form der Lichteintrittsseite, insbesondere die genannte Doppel-S-Form, gleichmäßig abgerundet ist.

In vorteilhafter weiterer Ausbildung der Erfindung ist eine Formgebung bzw. Profilierung der Lichteintrittsseite zur Mitte hin symmetrisch, also sozusagen rotationssymmetrisch. Diese Mitte liegt dabei über dem Mittelpunkt des Leuchtmittels bzw. dessen lichtabstrahlender Fläche. Soll die Form der Lichteintrittsseite anders sein als die grundsätzliche geometrische Form der Lichtaustrittsseite, weil beispielsweise die Lichteintrittsseite in etwa rund oder quadratisch ausgebildet ist und die Lichtaustrittsseite länglich und rechteckig, so kann von einer rotationssymmetrischen Ausbildung der Lichteintrittsseite im Hinblick auf die Profilierung oder Form abgewichen werden. Dann kann sie nämlich zu den Längsseiten einer längeren Lichtaustrittsseite hin stärker gewölbt sein als zu den kürzeren Seiten hin. Ein Übergang zwischen den unterschiedlich starken Profilierungen in die unterschiedlichen Richtungen der Lichteintrittsseite sollte wiederum möglichst gleichmäßig sein.

In weiterer Ausgestaltung der Erfindung sollte die Lichteintrittsseite mit ihrer Profilierung bzw. speziellen Formgebung den Großteil der Seite des Lichtverteilkörpers bilden, der zu dem Leuchtmittel hin weist. Vorteilhaft sollten dies mindestens 80% sein. So wird ein möglichst großer Anteil des von den Leuchtmitteln abgestrahlten Lichts entsprechend in den Lichtverteilkörper hinein eingeleitet.

Vorteilhaft ändert sich eine Steigung des Verlaufs der Lichteintrittsseite in den äußeren Bereichen geringer als in einem inneren Bereich, insbesondere als in einem Ring um den Mittelbereich bzw. über dem Mittelpunkt des Leuchtmittels. Dadurch kann der von diesen relativ flächenkleinen Bereichen angestrahlten größeren Fläche der Lichtaustrittsseite Rechnung getragen werden.

Der Lichtverteilkörper sollte so über dem Leuchtmittel angeordnet sein, dass kein zu großer Abstand besteht. Vorteilhaft kann die Lichteintrittsseite maximal 0,5 mm oder sogar nur maximal 0,4 mm über den Leuchtmitteln angeordnet sein. So kann eine hohe Positioniergenauigkeit und genaue Zuordnung von Leuchtmitteln und Lichteintrittsseite erreicht werden.

Eine Breite bzw. seitliche Ausdehnung der Lichteintrittsseite kann ebenfalls wenige Millimeter betragen, vorteilhaft maximal 3 mm oder besonders vorteilhaft sogar nur 2 mm oder 1,6 mm. Derart geringe Dimensionen sind dann vor allem für SMD-LED geeignet.

In Ausgestaltung der Erfindung kann die Lichtaustrittsseite als Diffusor ausgebildet sein bzw. eine Diffusorwirkung haben, vorteilhaft durch Aufbringen einer eher dünnen Diffusorschicht oder durch eine Aufrauung. Dabei kann eine Mikrorauheit vorgesehen sein mit einer Rautiefe von ca. 3 $\mu m$ bis 10 $\mu m$. Diese Diffusorwirkung sollte aber nicht allzu stark sein, da sie zwingend eine Verringerung der Lichtleistung bewirkt, was ja in nicht zu starkem Maß auftreten soll.

In weiterer Ausgestaltung der Erfindung kann die Lichtaustrittsseite flach bzw. eben ausgebildet sein. Vorteilhaft verläuft sie parallel zur Lichteintrittsseite bzw. senkrecht zu einer Symmetrieachse der Lichteintrittsseite. Bevorzugt bildet die Lichtaustrittsseite den Großteil der von dem Leuchtmittel weg weisenden Seite des Lichtverteilkörpers. Besonders bevorzugt sind dies mehr als 80%, besonders bevorzugt 100%.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

**Kurzbeschreibung der Zeichnungen**

Ausführungsbeispiele der Erfindung sind in den Zeichnungen schematisch dargestellt und werden im folgenden näher erläutert. In den Zeichnungen zeigen:

Fig. 1    eine Draufsicht auf ein ausgeleuchtetes Leuchtfeld einer Anzeigevorrichtung,

Fig. 2    einen Schnitt durch eine erfindungsgemäße Anzeigevorrich- tung mit einem Lichtverteilkörper über eine LED und

Fig. 3    eine Darstellung der Lichtverteilung an unterschiedlichen Punkten einer Lichteintrittsseite des Lichtverteilkörpers aus Fig. 2 hin zur Lichtaustrittsseite mit dem Leuchtfeld.

**Detaillierte Beschreibung der Ausführungsbeispiele**

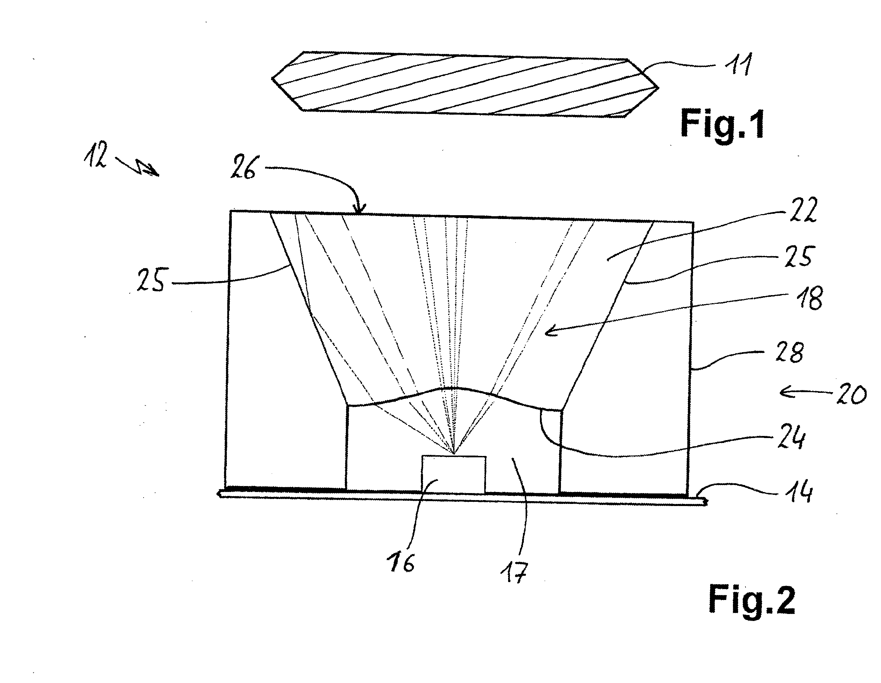

In Fig. 1 ist ein Leuchtfeld 11 in Draufsicht dargestellt, wie es mit einer erfindungsgemäßen Anzeigevorrichtung beleuchtet bzw. erzeugt werden soll. Ein solches Leuchtfeld kann beispielsweise als eine Art Balken Teil einer üblichen Sieben-Segment-Anzeige sein, wozu es eine grundsätzlich bekannte Form aufweist. Durch die Schraffierung soll verdeutlicht werden, dass es sehr gleichmäßig beleuchtet ist, also eine optisch sehr ansprechende Erscheinung bietet.

In Fig. 2 ist eine erfindungsgemäße Anzeigevorrichtung 12 im seitlichen Schnitt dargestellt. Sie weist einen Träger 14 auf, beispielsweise eine Leiterplatte, auf den als Leuchtmittel eine SMD-LED 16 aufgebracht ist. Von deren idealisiert als einer an der Oberseite liegenden punktförmigen Lichtquelle gehen Lichtstrahlen 18 nach oben weg.

Über der LED 16 ist als Lichtverteilmittel 20 ein Kunststoffkörper vorgesehen, der einen Lichtverteilkörper 22 aufweist, der aus möglichst transparentem Material, insbesondere mit einem vorstehend genannten Transmissionsgrad, besteht. Der Lichtverteilkörper weist die speziell geformte Lichteintrittsseite 24 auf an der Unterseite zur LED 16 hin. Nach oben weist er eine Lichtaustrittsseite 26 auf, die das Leuchtfeld 11 bildet. Dies bedeutet also, dass der Lichtverteilkörper 22 eher länglich und schmal ist.

Der Lichtverteilkörper 22 ist in einem Rahmenbauteil 28 enthalten, vorzugsweise in Mehrkomponentenspritzweise eingespritzt bzw. zusammen hergestellt. Dabei ist ein Freiraum 17 um die LED 16 herum vorgesehen.

Das Rahmenbauteil 28 besteht aus nicht-lichtdurchlässigem Material. So wird zum einen eine Abschirmung der LED 16 zur Seite hin erreicht, welche ungewünschte Leuchteffekte hervorrufen könnte. Des weiteren kann dadurch bei dem ganz links dargestellten Lichtstrahl 18 eine Reflexion zurück in den Lichtverteilkörper 22 erreicht werden und somit ein Austritt an der Lichtaustrittsseite 26 am Leuchtfeld 11 in vorgesehener Weise.

Die Seitenwände 25 des Lichtverteilkörpers 22 sind, wie eingangs erläutert, möglichst glatt bzw. hochglanzpoliert. So kann die Totalreflexion für höhere Ausbeute an Lichtstrahlen verbessert werden.

Es ist bei der Form der Lichteintrittsseite 24 zu erkennen, dass diese in der Mitte erhöht ausgebildet ist und dann zu beiden Seiten hin gleichmäßig bzw. symmetrisch abfällt. Dann ändert sich die Krümmung wieder und sie läuft nach außen zu ihrem umlaufenden Rand hin flach bzw. horizontal aus.

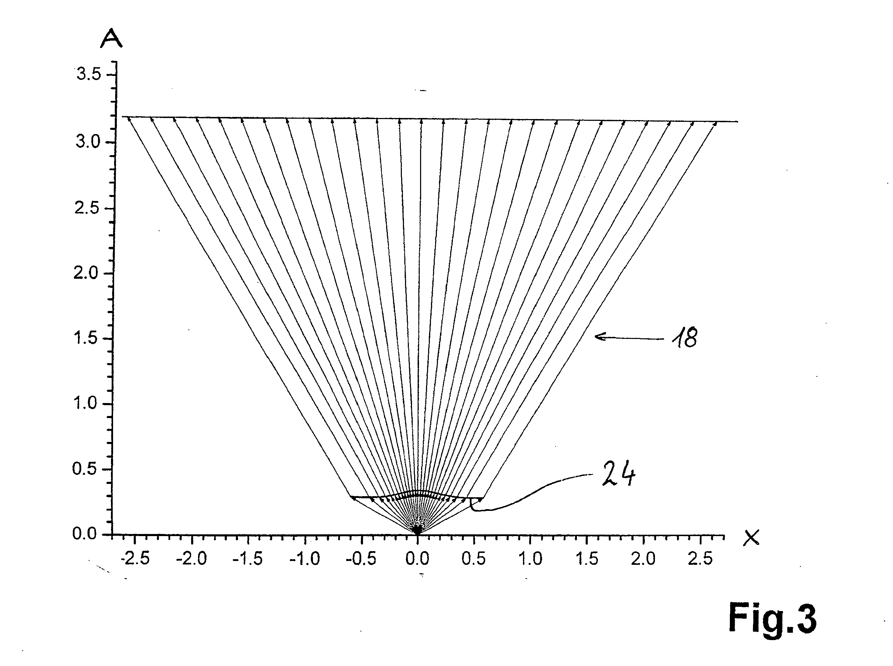

Eine genauere Darstellung der Ausbildung der Lichteintrittsseite 24 ist in Fig. 3 dargestellt. Dabei verläuft die X-Koordinate in der Fig. 2 in der Zeichenebene von links nach rechts. Mit A ist der Abstand von der punktförmigen Lichtquelle der LED 16, insbesondere an deren Oberseite, zur Lichteintrittsseite 24 bezeichnet. Beide Maßangaben X und A sind dabei in mm. Daraus ist zu erkennen, dass bei einer X-Ausdehnung der Lichteintrittsseite 24 von etwa 1,2mm die Höhenschwankungen zwischen 0,1 mm und 0,15mm liegen. Dies bedeutet also eine erhöhte Präzisionsanforderung an die Herstellung der Lichteintrittsseite 24 bzw. des gesamten Lichtverteilkörpers 22, insbesondere an die Spritzgussformen. Dies ist aber an sich technisch machbar. Der höchste Punkt der Lichteintrittsseite 24 liegt etwa 0,4mm über der Oberseite der LED.

Die Form der Lichteintrittsseite 24 lässt sich mathematisch mit folgender Formel beschreiben, wobei die Y-Richtung dem Abstand A aus Fig. 3 entspricht und h dem maximalen Abstand des höchsten Punktes von der Oberseite der LED:

$$y(x) = h - \frac{\left(\frac{x^2}{R}\right)}{1 + \sqrt{1 - (1+k) \cdot \frac{x^2}{R^2}}} + a_2 \cdot x^2$$

mit
$h = 1{,}255mm$
$R = 0{,}496mm$

$k = -1,605$

$\alpha_2 = 0,4504$

Wie aus den Figuren deutlich hervorgeht, ist das Leuchtfeld 11, das letztendlich möglichst hell und gleichmäßig beleuchtet werden soll, in der X-Richtung erheblich länger als in einer Richtung des Abstands A quer dazu. Insofern ist die Ausbildung der Lichteintrittsseite 24 in der Richtung quer zur X-Richtung zwar mit einem grundsätzlich ähnlichen Profil versehen, welches allerdings in entsprechendem Maß auf die entsprechende Breite gestaucht ist. Da das Leuchtfeld etwa sieben Mal so lang ist wie breit, gilt dieser Faktor von sieben in etwa auch für die Breite der Lichteintrittsseite 24 in Richtung quer zur X-Richtung. Dies ist aber kein Problem und leicht machbar.

Es ist in Ausbildung der Erfindung leicht vorstellbar, dass für eine komplette Sieben-Segment-Anzeige mehrere solcher Lichtverteilkörper 22 in einem Rahmenbauteil 28 integriert sind, welches eben ein einziges Rahmenbauteil ist, in dem die Lichtverteilkörper 22 in üblicher Anordnung eingesetzt bzw. eingespritzt sind.

An der Lichtaustrittsseite 26 kann noch eine gewisse Diffusorwirkung vorgesehen sein. Diese kann durch eine eingangs beschriebene Aufrauung erreicht werden. Eine solche Aufrauung sollte aber nicht zu stark sein, da durch eine zu starke Diffusorwirkung gleichzeitig eine zu starke Dämpfung des Lichts bedingt wird. Alternativ kann eine Schicht aus üblichem Diffusormaterial aufgebracht sein, beispielsweise mit einer Dicke von 1 $\mu$m bis 20 $\mu$m oder sogar bis 50 $\mu$m. Des weiteren sollte nicht nur auf eine präzise Formgebung der Lichteintrittsseite 24 geachtet werden bei der Herstellung, sondern auch darauf, dass sie in der richtigen Höhe über der LED 16 angeordnet ist und auch keine Seitenverschiebung stattfindet. Es ist also ein sehr präzises Herstellen und Zusammenbauen notwendig.

**Patentansprüche**

1. Anzeigevorrichtung mit einem Träger (14), einem auf dem Träger angeordneten Leuchtmittel (16) und Lichtverteilmitteln (20) über dem Leuchtmittel (16) mit einer Leuchtrichtung weg von dem Träger (14) und dem Leuchtmittel (16), wobei die Lichtverteilmittel (20) einen dreidimensionalen Lichtverteilkörper (22) aufweisen mit einer Lichteintrittsseite (24) zum Leuchtmittel (16) hin une einer Lichtaustrittsseite (26) von dem Leuchtmittel weg, wobei der Lichtverteilkörper (22) aus transparentem Material besteht und die Lichteintrittsseite (24) eine Form aufweist zur Optimierung der gleichmäßigen Lichtverteilung vom Leuchtmittel auf die Lichtaustrittsseite (26), **dadurch gekennzeichnet, dass** die Lichteintrittsseite (24) im Seitenschnitt eine Doppel-S-Form aufweist mit ihrem von dem Leuchtmittel am weitesten entfernten Punkt bzw. mit ihrem höchsten Punkt über dem Mittelpunkt des Leuchtmittels bzw. dessen lichtabstrahlender Fläche.

2. Anzeigevorrichtung nach Anspruch 1, **dadurch gekennzeichnet, dass** die Lichtaustrittsseite (26) als Diffusor ausgebildet ist bzw. eine Diffusorschicht auf die Lichtaustrittsseite aufgebracht ist oder die Lichtaustrittsseite bearbeitet ist für eine Diffusorwirkung, wobei vorzugsweise die Lichtaustrittsseite durch eine Aufrauung als Diffusor ausgebildet ist, insbesondere durch eine Mikrorauheit mit einer Rautiefe von ca. 3 $\mu$m bis 10 $\mu$m.

3. Anzeigevorrichtung nach Anspruch 1 oder 2, **dadurch gekennzeichnet, dass** der Lichtverteilkörper (22) einen Transmissionsgrad für das Licht der Leuchtmittel von mindestens 95% aufweist, vorzugsweise 97% bis 99%, wobei insbesondere der Lichtverteilkörper aus nicht eingefärbtem Material besteht und vorzugsweise aus Kunststoff.

4. Anzeigevorrichtung nach einem der vorhergehenden Ansprüche, **dadurch gekennzeichnet, dass** der ansonsten transparente Lichtverteilkörper (22) Streupartikel beinhaltet zur Verbesserung der Lichtverteilung.

5. Anzeigevorrichtung nach einem der vorhergehenden Ansprüche, **dadurch gekennzeichnet, dass** der Lichtverteilkörper (22) einteilig und einstückig ausgebildet ist, wobei insbesondere die gesamten Lichtverteilmittel einteilig und einstückig sind und nur aus dem Lichtverteilkörper bestehen.

6. Anzeigevorrichtung nach einem der vorhergehenden Ansprüche, **dadurch gekennzeichnet, dass** die Lichteintrittsseite (24) eine glatte Oberfläche aufweist.

7. Anzeigevorrichtung nach einem der vorhergehenden Ansprüche, **dadurch gekennzeichnet, dass** eine maximale Höhendifferenz zwischen dem niedrigsten Punkt und dem höchsten Punkt der Lichteintrittsseite (24) weniger als 0,2 mm beträgt, vorzugsweise etwa 0,1 mm.

8. Anzeigevorrichtung nach Anspruch 7, **dadurch gekennzeichnet, dass** die Lichteintrittsseite (24) eine Breite bzw. seitliche Ausdehnung von maximal 3 mm aufweist, vorzugsweise maximal 2 mm und insbesondere etwa 1,6 mm.

**9.** Anzeigevorrichtung nach einem der Ansprüche 7 oder 8, **dadurch gekennzeichnet, dass** sich die Profilierung der Lichteintrittsseite (24) gleichmäßig verändert bzw. abgerundet ausgebildet ist.

**10.** Anzeigevorrichtung nach einem der Ansprüche 7 bis 9, **dadurch gekennzeichnet, dass** die Profilierung der Lichteintrittsseite (24) zur Mitte hin symmetrisch ist.

**11.** Anzeigevorrichtung nach einem der Ansprüche 7 bis 10, **dadurch gekennzeichnet, dass** sich eine Steigung des Verlaufs der Lichteintrittsseite (24) in den äußeren Bereichen geringer ändert als in einem Ring um den Mittelbereich.

**12.** Anzeigevorrichtung nach einem der Ansprüche 7 bis 11, **dadurch gekennzeichnet, dass** die Lichteintrittsseite (24) mit der Profilierung den Großteil der zu dem Leuchtmittel hin weisenden Seite des Lichtverteilkörpers bildet, vorzugsweise mehr als 80%, wobei insbesondere die Lichtaustrittsseite den Großteil der von dem Leuchtmittel weg weisenden Seite des Lichtverteilkörpers bildet, vorzugsweise mehr als 80%.

**13.** Anzeigevorrichtung nach einem der vorhergehenden Ansprüche, **dadurch gekennzeichnet, dass** die Lichteintrittsseite (24) maximal 0,5 mm über den Leuchtmitteln angeordnet ist, vorzugsweise maximal 0,4 mm.

**14.** Anzeigevorrichtung nach einem der vorhergehenden Ansprüche, **dadurch gekennzeichnet, dass** die Lichtaustrittsseite (26) flach bzw. eben ist, insbesondere parallel zur Lichteintrittsseite (24) bzw. senkrecht zu einer Symmetrieachse der Lichteintrittsseite.

**15.** Anzeigevorrichtung nach einem der vorhergehenden Ansprüche, **dadurch gekennzeichnet, dass** auf dem Träger mehrere Leuchtmittel (16) angeordnet sind und pro Leuchtmittel ein Lichtverteilmittel vorgesehen ist, wobei mehrere Lichtverteilmittel zusammenhängend als Bauteil ausgebildet sind, insbesondere als zusammen durch Kunststoffspritzen hergestelltes Bauteil.

**Claims**

**1.** A display device with a support (14), a luminous means (16) arranged on the support and light distributing means (20) above the luminous means (16) with a light emission direction away from the support (14) and the luminous means (16), the light distributing means (20) comprising a three-dimensional light distributing body (22) with a light entrance side (24) facing towards the luminous means (16) and a light exit side (26) facing away from the luminous means, with the light distributing body (22) consisting of transparent material and the light entrance side (24) being shaped to optimise uniform light distribution from the luminous means to the light exit side (26), **characterised in that** the light entrance side (24) has a double S shape in side sectional view, with its point furthest away from the luminous means or its highest point over the centre point of the luminous means or the light-emitting area thereof.

**2.** The display device according to claim 1, **characterised in that** the light exit side (26) takes the form of a diffuser or a diffuser layer is applied to the light exit side or the light exit side is machined for a diffuser effect, the light exit side preferably being configured as a diffuser by roughening, in particular by a microroughness with a peak-to-valley height of approx. 3 $\mu$m to 10 $\mu$m.

**3.** The display device according to claim 1 or 2, **characterised in that** the light distributing body (22) comprises a transmittance for the light of the luminous means of at least 95 %, preferably 97 % to 99 %, the light distributing body consisting in particular of uncoloured material and preferably of synthetic material.

**4.** The display device according to any one of the preceding claims, **characterised in that** the otherwise transparent light distributing body (22) contains scattering particles for improving light distribution.

**5.** The display device according to any one of the preceding claims, **characterised in that** the light distributing body (22) is of one-part and one-piece construction, the entire light distributing means being in particular of one-part and one-piece construction and consisting of just the light distributing body.

**6.** The display device according to any one of the preceding claims, **characterised in that** the light entrance side (24) has a smooth surface.

**7.** The display device according to any one of the preceding claims, **characterised in that** a maximum height difference between the lowest point and the highest point of the light entrance side (24) amounting to less than 0.2 mm, preferably approximately 0.1 mm.

8. The display device according to claim 7, **characterised in that** the light entrance side (24) comprises a width or lateral extent of maximum 3 mm, preferably maximum 2 mm, and in particular approximately 1.6 mm.

9. The display device according to claim 7 or 8, **characterised in that** the profiling of the light entrance side (24) varies uniformly or is of rounded construction.

10. The display device according to any one of the claims 7 to 9, **characterised in that** the profiling of the light entrance side (24) is symmetrical relative to the centre.

11. The display device according to any one of the claims 7 to 10, **characterised in that** a gradient of the extension of the light entrance side (24) varies less in the outer regions than in a ring around the central region.

12. The display device according to any one of the claims 7 to 11, **characterised in that** the light entrance side (24) with the profiling forms the majority of the side of the light distributing body facing towards the luminous means, preferably more than 80 %, in particular the light exit side forms the majority of the side of the light distributing body facing away from the luminous means, preferably more than 80 %.

13. The display device according to any one of the preceding claims, **characterised in that** the light entrance side (24) is arranged at maximum 0.5 mm above the luminous means, preferably at maximum 0.4 mm.

14. The display device according to any one of the preceding claims, **characterised in that** the light exit side (26) is flat or planar, in particular parallel to the light entrance side (24) or perpendicular to an axis of symmetry of the light entrance side.

15. The display device according to any one of the preceding claims, **characterised in that** a plurality of luminous means (16) are arranged on the support and one light distributing means is provided for each luminous means, a plurality of light distributing means being integrally constructed as a component, in particular as a component produced together by injection moulding of synthetic material.

**Revendications**

1. Dispositif d'affichage avec un support (14), un moyen d'éclairage (16) disposé sur le support et des moyens de diffusion de lumière (20) au-dessus du moyen d'éclairage (16) avec une direction d'éclairage éloignée du support (14) et du moyen d'éclairage (16), les moyens de diffusion de lumière (20) présentant un corps de diffusion de lumière (22) tridimensionnel avec un côté d'entrée de la lumière (24) vers le moyen d'éclairage (16) et un côté de sortie de la lumière (26) éloigné du moyen d'éclairage, le corps de diffusion de lumière (22) étant en matériau transparent et le côté d'entrée de la lumière (24) présentant une forme pour optimiser la diffusion de lumière uniforme du moyen d'éclairage sur le côté de sortie de la lumière (26), **caractérisé en ce que** le côté d'entrée de la lumière (24) présente dans la section latérale une forme en double S avec son point le plus éloigné du moyen d'éclairage ou avec son point le plus haut au-dessus du centre du moyen d'éclairage ou de sa surface émettant la lumière.

2. Dispositif d'affichage selon la revendication 1, **caractérisé en ce que** le côté de sortie de la lumière (26) est constitué comme un diffuseur ou une couche de diffuseur est appliquée sur le côté de sortie de la lumière ou le côté de sortie de la lumière est façonné pour un effet de diffuseur, le côté de sortie de la lumière étant constitué de préférence comme un diffuseur par un état de rugosité, en particulier par une microrugosité d'une profondeur de rugosité d'environ 3 $\mu$m à 10 $\mu$m.

3. Dispositif d'affichage selon la revendication 1 ou 2, **caractérisé en ce que** le corps de diffusion de lumière (22) présente un degré de transmission pour la lumière des moyens d'éclairage d'au moins 95%, de préférence de 97% à 99%, le corps de diffusion de lumière étant en particulier en matériau non teinté et de préférence en matière plastique.

4. Dispositif d'affichage selon une quelconque des revendications précédentes, **caractérisé en ce que** le corps de diffusion de lumière (22) autrement transparent contient des particules de dispersion pour améliorer la diffusion de la lumière.

5. Dispositif d'affichage selon une quelconque des revendications précédentes, **caractérisé en ce que** le corps de diffusion de lumière (22) est constitué en une pièce et monobloc, tous les moyens de diffusion de lumière étant en particulier en une pièce et monoblocs et n'étant composés que du corps de diffusion de lumière.

6. Dispositif d'affichage selon une quelconque des revendications précédentes, **caractérisé en ce que** le côté d'entrée de la lumière (24) présente une surface lisse.

7. Dispositif d'affichage selon une quelconque des revendications précédentes, **caractérisé en ce qu'**une différence de hauteur maximale entre le point le plus bas et le point le plus haut du côté d'entrée de la lumière (24) est inférieur à 0,2 mm, de préférence environ 0,1 mm.

8. Dispositif d'affichage selon la revendication 7, **caractérisé en ce que** le côté d'entrée de la lumière (24) présente une largeur ou une expansion latérale de 3 mm maximum, de préférence de 2 mm maximum et en particulier d'environ 1,6 mm.

9. Dispositif d'affichage selon l'une quelconque des revendications 7 ou 8, **caractérisé en ce que** le profilage du côté d'entrée de la lumière (24) est constitué de manière modifiée ou arrondie de façon uniforme.

10. Dispositif d'affichage selon une quelconque des revendications 7 à 9, **caractérisé en ce que** le profilage du côté d'entrée de la lumière (24) est symétrique au centre.

11. Dispositif d'affichage selon une quelconque des revendications 7 à 10, **caractérisé en ce qu'**une rampe du profil du côté d'entrée de la lumière (24) varie moins dans les zones extérieures que dans une couronne autour de la zone centrale.

12. Dispositif d'affichage selon une quelconque des revendications 7 à 11, **caractérisé en ce que** le côté d'entrée de la lumière (24) forme avec le profilage la grande partie du côté tourné vers le moyen d'éclairage du corps de diffusion de lumière, de préférence plus de 80%, le côté de sortie de la lumière formant en particulier la grande partie du côté s'éloignant du moyen d'éclairage du corps de diffusion de lumière, de préférence plus de 80%.

13. Dispositif d'affichage selon une quelconque des revendications précédentes, **caractérisé en ce que** le côté d'entrée de la lumière (24) est disposé au maximum 0,5 mm au-dessus des moyens d'éclairage, de préférence au maximum 0,4 mm.

14. Dispositif d'affichage selon une quelconque des revendications précédentes, **caractérisé en ce que** le côté de sortie de la lumière (26) est plat ou plan, en particulier parallèle au côté d'entrée de la lumière (24) ou perpendiculaire à un axe de symétrie du côté d'entrée de la lumière.

15. Dispositif d'affichage selon une quelconque des revendications précédentes, **caractérisé en ce que** plusieurs moyens d'éclairage (16) sont disposés sur le support et **en ce qu'**un moyen de diffusion de lumière est prévu par moyen d'éclairage, plusieurs moyens de diffusion de lumière étant constitués en continu comme un composant, en particulier comme un composant fabriqué au total par injections de matière plastique.

Fig.1

Fig.2

EP 2 259 098 B1

Fig.3

EP 2 259 098 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20314391 U
- DE 4311937 A
- US 3780357 A
- EP 1667091 A2